# EUROPÄISCHE PATENTSCHRIFT

(11) **EP 2 234 227 B1**
(45) Veröffentlichungstag und Bekanntmachung des Hinweises auf die Patenterteilung: **12.10.2016**
(21) Anmeldenummer: 10003024.6
(22) Anmeldetag: 23.03.2010
(51) Int. Cl.: H02B 1/03

(54) **Halterung für elektronische Haushaltszähler**
Holder for electronic household meters
Fixation pour compteur électrique domestique

(30) Priorität: 23.03.2009 DE 202009003921 U
(43) Veröffentlichungstag der Anmeldung: 29.09.2010
(73) Patentinhaber: Hager Electro GmbH & Co. KG, 66440 Blieskastel (DE)
(72) Erfinder: Braun, Werner, 74906 Bad Rappenau (DE); Braun, Andreas, 74196 Neuenstadt (DE); Schmiederer, Roland, 77876 Kappelrodeck (DE)
(74) Vertreter: Nuss, Laurent

(56) Entgegenhaltungen:
- EP-A1- 1 804 065
- EP-A2- 1 593 978

## Beschreibung

### TECHNISCHES GEBIET

Die Erfindung betrifft eine Halterung, mit der elektronische Haushaltszähler an der Tragkonstruktion eines Zähler- und Verteilerschrankes angebracht werden können. Solche Zähler- und Verteilerschränke können sich im Inneren eines Gebäudes oder im Freien befinden. Im letzteren Fall müssen solche Schränke den Witterungsverhältnissen angepasst sein.

### STAND DER TECHNIK

Bei Zähler- und Verteilerschränken, seien sie innerhäuslich oder im Freien vorhanden, sind regelmäßig zwei Tragprofile im Schrankgehäuse befestigt. Auf diesen Tragprofilen werden unmittelbar oder mittelbar die im Schrank unterzubringenden elektrischen Komponenten wie Zähler, Sammelschienen, Schaltgeräte, Schutzschalter und sonstige Reiheneinbaugeräte befestigt. Die Tragprofile können aus Kunststoff oder Metall bestehen.

Es sind Drei-Punkt-gelagerte mechanische Zähler, sogenannte Ferraris-Zähler, bekannt, die auf einer Zählertragplatte angeschraubt befestigt werden. Die Zählertragplatte selbst wird auf zwei Tragprofilschienen angeschraubt. Aus der DE 10 2006 050 701 A1 ist es darüber hinaus bekannt, Befestigungskonstruktionen in einem Zähler- und Verteilerschrank derart vorzusehen, dass sowohl mechanische Zähler als auch elektronische Haushaltszähler wahlweise in demselben Schrank angeordnet werden können. Dadurch ist es möglich, mechanische Zähler gegen elektronische Haushaltszähler auswechseln zu können, ohne dazu die gesamte Befestigungskonstruktion oder sogar den ganzen Schrank mit auswechseln zu müssen.

Im Freien aufgestellte Schränke der vorstehend genannten Art sind durchgehend mit mechanischen Zählern bestückt.

Die EP1804065 A1 offenbart eine Halterung für einen elektronischen Zähler, welche von vorne auf einer Tragkonstrulchen aubringbar ist.

### DARSTELLUNG DER ERFINDUNG

Ausgehend von diesem Stand der Technik liegt der Erfindung die Aufgabe zugrunde, eine Halterung für elektronische Haushaltszähler anzugeben, die sowohl in innerhäusliche als auch im Freien befindliche Zähler- und Verteilerschränke eingebaut werden kann.

Die Schränke können dabei auch solche sein, die für mechanische Zähler vorgesehen waren. Auf diese Weise ist es möglich, an Zähler- und Verteilerschränken, seien sie innerhäuslich oder im Freien aufgestellt, die vorhandenen mechanischen Zähler gegen elektronische Zähler auszutauschen und dabei die für den mechanischen Zähler vorhandene Halterung weiter zu benutzen.

Nähere Einzelheiten zu der Ausbildung einer solchen Halterung und weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivisch auseinander gezogene Darstellung einer auf Tragprofilschienen montierten Halterung für elektronische Haushaltszähler eines innerhäuslichen Zähler- und Verteilerschrankes,
- Fig. 2: eine Darstellung ähnlich der von Fig. 1 mit einer auf zwei Tragprofilschienen befestigten Haube für einen im Freien vorgesehenen Zähler- und Verteilerschrank,
- Fig. 3: eine perspektivisch auseinander gezogene Darstellung der Einzelteile der Halterung nach Fig. 1,
- Fig. 4: eine perspektivisch auseinander gezogene Darstellung der Einzelteile der Halterung nach Fig. 2,
- Fig. 5: eine perspektivisch auseinander gezogene Darstellung von Teilen einer anderen Ausführungsform einer Halterung für elektronische Haushaltszähler eines im Freien vorgesehenen Zähler- und Verteilerschrankes,
- Fig. 6: eine Darstellung ähnlich der von Fig. 5 einer derartigen Halterung für elektronische Haushaltszähler eines innerhäuslichen Zähler- und Verteilerschrankes,
- Fig. 7: eine Querverdrahtung zwischen einem Adapter-Feld und einem seitlich daneben vorhandenen Einspeisungs-Feld.

### WEGE ZUM AUSFÜHREN DER ERFINDUNG

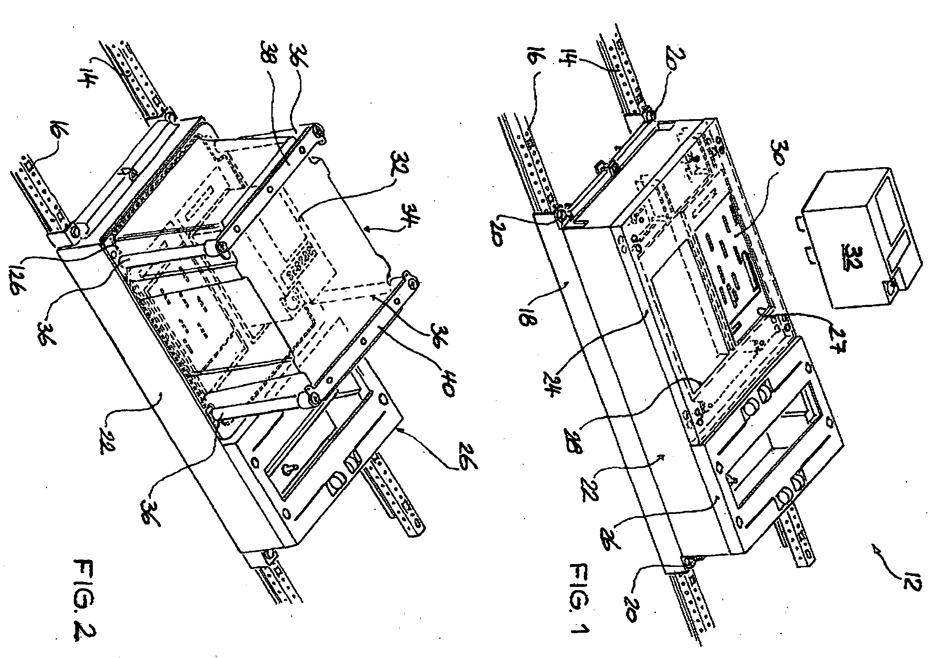

In Fig. 1 ist ein sogenannter Zählerplatz 12 eines in der Zeichnung nicht dargestellten innerhäuslichen Zähler- und Verteilerschrankes dargestellt. Der Zählerplatz 12 besitzt zwei in einem derartigen Schrank in üblicher Weise fest angebrachte Tragprofilschienen 14,16. Auf diesen beiden Schienen 14,16 ist eine Zählertragplatte 18 mittels an ihrem oberen und unteren Ende vorhandener Befestigungsschrauben 20 festgeschraubt.

Auf der Zählertragplatte 18 ist eine Haube 22 angeschraubt. Die in Fig. 1 sichtbare Oberseite der Haube 22 stellt aufgrund der in einem aufrecht stehenden Schrank in vertikaler Ausrichtung vorhandenen Tragprofilschienen die Vorderseite des Zählerplatzes 12 dar. Diese Vorderseite wird an dem in Fig. 1 linken Bereich durch eine Abdeckhaube 24 und in einem daran anschließenden rechten Bereich durch eine Schutzabdeckung 26 weitgehend verschlossen.

In der Abdeckhaube 24 sind im vorliegenden Fall zwei nebeneinander liegende Fenster 27, 28 vorhanden. In dem einen Fenster 27 ist ein Adapter 30 zu erkennen, auf dem ein elektrischer Haushaltszähler 32 aufgesteckt und damit elektrisch angeschlossen werden kann. Die elektrische Kabelführung in die Haube 22 hinein und aus derselben heraus ist nicht dargestellt.

Unterhalb der Schutzabdeckung 26 ist ein Steuergeräteplatz ausgebildet, in dem Sicherungen oder sonstige elektronische Bauteile in an sich bekannter Art und Weise platziert werden können. Der Steuergeräteplatz könnte statt oberhalb auch unterhalb des die Zähler 32 aufnehmenden Feldes angeordnet sein. Sowohl die Abdeckhaube 24 als auch die Schutzabdeckung 26 sind in an sich bekannter Weise über Plombiermaßnahmen fest an der Haube 22 angebracht, so dass die Abdeckhaube 24 und die Schutzabdeckung 26 nicht zerstörungsfrei und damit nicht unbemerkt von der Haube 22 abgenommen werden können.

Die gleiche Haube 22 ist auch bei der in Fig. 2 dargestellten Halterung für einen in der Zeichnung nicht dargestellten Zähler- und Verteilerschrank vorhanden, der im Freien aufgestellt ist. Die Haube 22 sitzt in diesem Fall unmittelbar auf zwei Tragprofilschienen 14,16 auf. Die Haube 22 ist, da sich der in ihr vorhandene elektrische Haushaltszähler 32 im Freien befindet und damit den Witterungsverhältnissen voll ausgesetzt ist, mit einer Klarsichtabdeckung 34 - bezogen auf den Schrank - von vorne, beziehungsweise - bezogen auf die Fig. 2 - von oben abgedeckt. Außerdem ist zwischen der Klarsichtabdeckung 34 und der Haube 22 ein Dichtungsband 126 vorhanden, wie noch nachstehend näher beschrieben ist. Auch der vorstehend erwähnte, beispielsweise Sicherungen aufnehmende Steuergeräteplatz wird regelmäßig durch eine der Klarsichtabdeckung 34 vergleichbare, verplombbare Abdeckung verschlossen.

Die haubenartige Klarsichtabdeckung 34 ist in ihren vier Eckbereichen über Plombierschrauben 36, von denen jeweils zwei Plombierschrauben 36 über einen Haltebügel 38 beziehungsweise 40 verbunden sind, durch die Haube 22 hindurch an den beiden Tragprofilschienen 14,16 befestigt. Auch in diesem Falle wird über die Plombierschrauben 36 ein zerstörungsfreies Entfernen der Klarsichtabdeckung 34 verhindert. Entsprechendes gilt auch für die in Fig. 2 auf der rechten Seite vorhandene Schutzabdeckung 26, die mittels Plombiertechnik an der Haube 22 angeschraubt befestigt ist.

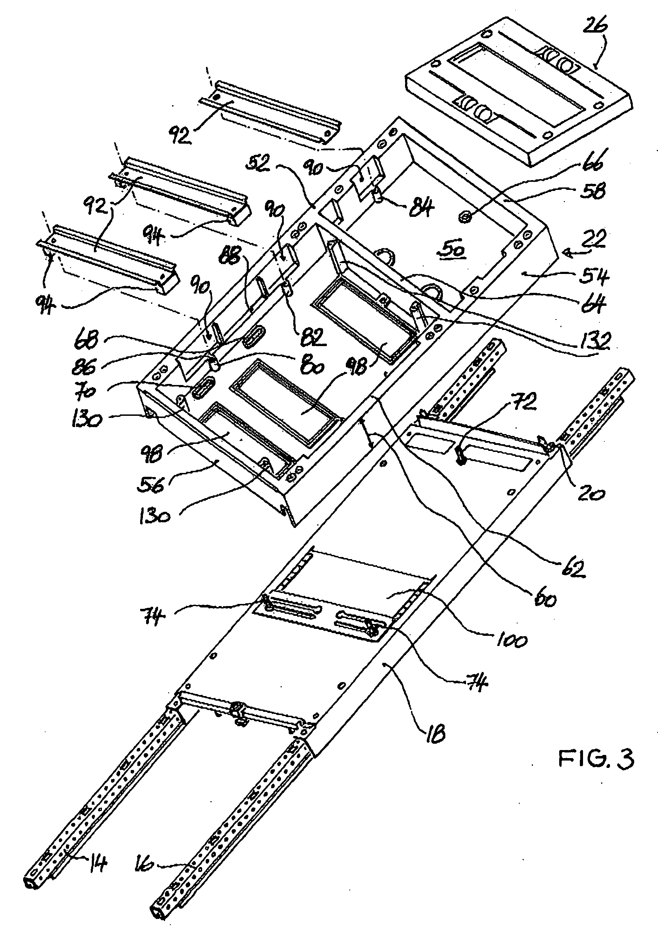

In Fig. 3 ist die Haube 22 vereinzelt dargestellt. Die Haube 22 besitzt eine Bodenplatte 50, die von einer linken und rechten Seitenwand 52,54 und von ihren beiden demgegenüber schmäleren - in Fig. 3 - unteren und oberen Seitenwänden 56,58 eingerahmt wird. Die Höhe 60 zwischen der vorderen Stirnseite 62 aller Seitenwände und der Bodenplatte 50 ist jeweils gleich groß. Im vorliegenden Fall ist zwischen der linken und rechten Seitenwand 52,54 noch eine Querwand 64 vorhanden, die ebenfalls die Höhe 60 aufweist. Dadurch werden zwei Innenräume voneinander abgetrennt, die einerseits von der Abdeckhaube 24 (Fig. 1) und andererseits von der Schutzabdeckung 26 von oben beziehungsweise von vorne abgedeckt werden.

In der Bodenplatte 50 ist oben ein mittiger lochartigen Ausbrechbereich 66 und im -bezogen auf die Fig. 3 - linken Bereich der Bodenplatte 50 sind jeweils zwei seitliche langlochartige Ausbrechbereiche 68,70 vorhanden. Durch den mittleren Ausbrechbereich 66 und durch die zwei seitlichen Ausbrechbereiche 68 beziehungsweise 70 kann die Haube 22 auf die Zählertragplatte 18 aufgeschraubt werden. Zu diesem Zweck ragen von dieser dementsprechend drei Schraubenschäfte 72,74 aus. Die Schraubenschäfte 72, 74 fluchten mit den entsprechenden Ausbrechbereichen 66 und 68 beziehungsweise 70. Statt der Haube 22 kann an den drei Schraubenschäften 72, 74 ein mechanischer Zähler, wie beilspielsweise ein Ferraris-Zähler, befestigt werden. Nach Entfernen eines solchen mechanischen Zählers kann dann die Haube 22 an dessen Befestigungsschrauben befestigt werden. Die Haube 22 dient dann, wie Fig. 1 zeigt, zum Anbringen eines elektrischen Haushaltszählers 32. Dazu ist die Haube 22 wie folgt ausgebildet.

Auf der Innenseite der linken und rechten Seitenwand 52, 54 sind mehrere Anschraubtuben 80,82,84 vorhanden. Die Anschraubtuben ragen von der Innenseite der Bodenplatte 50 aus. Die obere Stirnseite 86 einer jeden Anschraubtube endet auf dem Niveau des Bodens 88 einer in der betreffenden Seitenwand 52 beziehungsweise 54 vorhandenen Nische 90. Auf jeweils zwei einander gegenüberliegenden solchen Anschraubtuben kann eine Hutschiene 92 aufgeschraubt werden. Im vorliegenden Fall ist die jeweilige Hutschiene 92 nicht unmittelbar, sondern mittelbar über ein Distanzstück 94 an den Anschraubtuben 80, 82, 84 angeschraubt. Die Höhe des Distanzstückes 94 richtet sich nach den geometrischen Anforderungen und den Höhenmaßen, die für die Abdeckhaube 24 und die Schutzabdeckung 26 an dem jeweiligen Schrank zur Verfügung stehen. Es wäre auch möglich, die Hutschienen 92 unmittelbar auf die Anschraubtuben 80, 82 beziehungsweise 84 aufzuschrauben, wie es bezüglich der beiden Anschraubtuben 84 im vorliegenden Beispielsfall dargestellt ist.

Auf den Hutschienen 92 können dann beispielsweise einer oder zwei Adapter 30 befestigt werden. Auf den einzelnen Adaptern 30 wird dann der jeweilige elektrische Haushaltszähler 32 aufgesteckt und die Abdeckplatte 24 auf die Haube aufgeschraubt. Die Abdeckhaube 24 und der elektrische Haushaltszähler können zerstörungsfrei nicht von der Befestigungskonstruktion entnommen werden.

In der Bodenplatte 50 der Haube 22 sind mehrere rechteckförmige Ausbrechbereiche vorgesehen, wie im vorliegenden Fall drei solcher Ausbrechbereiche 98, durch die jeweils elektrische Leitungen in das Innere der Haube hineingeführt beziehungsweise aus dem Inneren wieder herausgeführt werden können, was im einzelnen nicht dargestellt ist. Auch in der Zählertragplatte 18 ist eine mit einem Ausbrechbereich 98 korrespondierende Aussparung 100 vorhanden, um die Leitungen unter beziehungsweise hinter der Zählertragplatte 18 zwischen den beiden Tragprofilschienen 14,16 nach - bezogen auf die Fig. 3 - links unten weiterzuführen.

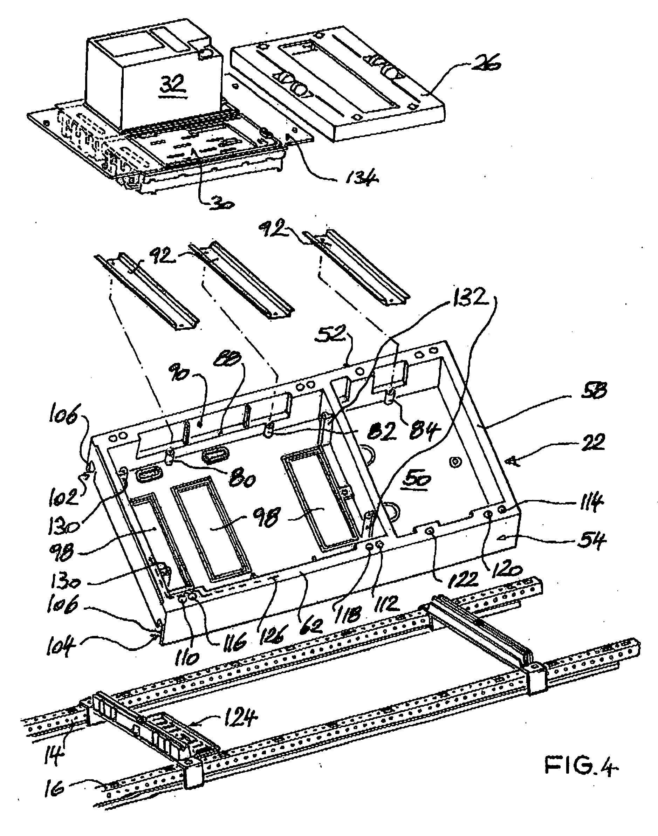

Die bei einem im Freien aufgestellten Zähler- und Verteilerschrank vorhandene Haube 22 ist, wie Fig. 4 zeigt, identisch zu der Haube 22 eines innerhäuslichen Zählerplatzes, wie er in Fig. 3 dargestellt ist, ausgebildet.

In der Haube 22 sind im Anschlussbereich zwischen der Bodenplatte 50 und der linken und rechten Seitenwand 52, 54 jeweils ein Längskanal 102,104 vorhanden, der jeweils durch die betreffende Seitenwand 52, 54 voll hindurchgeht und von denen in Fig. 4 die in der unteren Seitenwand 56 vorhandenen beiden türartigen Mündungsbereiche 106 zu erkennen sind. Die gleichen türartigen Öffnungsbereiche sind auch in der oberen Seitenwand 58 vorhanden. Mit diesen Längskanälen 102, 104, die - bezogen auf die Fig. 4 - nach unten offen sind, kann die Haube 22 auf die beiden Tragprofilschienen 14,16 haubenartig aufgesetzt werden, wie dies der Fig. 2 entnommen werden kann. Bei den Freiluft-Schränken ist nämlich die im häuslichen Zählerplatz vorhandene Zählertragplatte 18 nicht vorhanden. Bei Montage der Haube 22 bei einem innerhäuslichen Zählerplatz, wie er in Fig. 1 dargestellt ist, werden diese Längskanäle nicht benötigt.

In der linken und rechten Seitenwand 52, 54 sind jeweils drei Durchbohrungen 110, 112,114 vorhanden, die von vorne nach hinten beziehungsweise, bezogen auf die Fig. 4, von oben nach unten durch die betreffende Seitenwand hindurchgehen. Durch die Durchbohrungen 110,112,114 kann die Haube 22 direkt an den Tragprofilschienen 14,16 angeschraubt und dadurch an denselben befestigt werden. Die Klarsichtabdeckung 34 könnte den von der Schutzabdeckung 26 abgedeckten Bereich mit abdecken; sie wäre dann entsprechend größer als die in Fig. 2 dargestellte Klarsichtabdeckung 34. Eine solche Abdeckhaube könnte dann - zusätzlich - durch die Durchbohrung 114 an den Tragprofilschienen 14,16 befestigt werden.

An den Anschraubtuben 80,82,84 können wiederum Hutschienen 92 angeschraubt werden, die im Bereich der Böden 88 der in der linken und rechten Seitenwand 52, 54 vorhandenen Nischen 90 jeweils enden. Die Nischenböden 88 dienen zur kippsicheren Halterung der Hutschienen. Die gleiche kippsichere Halterung ist auch bei dem innerhäuslichen Zählerplatz (Fig. 3) vorhanden. Dort stützen sich die Distanzstücke 94 auch auf den Nischenböden 88 ab.

Neben den Durchbohrungen 110,112,114 ist jeweils eine weitere Durchbohrung 116,118,120 in den beiden Seitenwänden 52,54 vorhanden. Die Durchbohrungen 116,118 dienen zum Befestigen der Plombierschrauben 36. Die Durchbohrung 120 und eine weitere Durchbohrung 122 dient zum Befestigen der Schutzabdeckung 26.

Zwecks Abdichtung der im Inneren der Haube 22 und der Klarsichtabdeckung 34 vorhandenen elektrischen und elektronischen Bauteile, wie beispielsweise dem elektrischen Haushaltszähler 32, kann der jeweils in der Bodenplatte 50 der Haube 22 zum Durchführen von Leitungen benötigte Ausbrechbereich 98 durch eine Abdichtplatte 124 verschlossen werden. In der Abdichtplatte 124, die aus witterungsbeständigem, flexiblem Kunststoff besteht, sind von elektrischen Leitungen durchstoßbare Kreisflächen vorhanden, die in an sich bekannter Weise es ermöglichen, die jeweilige Leitung spritzwasserdicht und staubdicht durch die Abdichtplatte 124 hindurchzuführen. Auf der umlaufenden Stirnseite 62 der linken und rechten Seitenwand 52,54 und der vorderen Seitenwand 56 sowie der Querwand 64 läuft ein Dichtungsband 126 herum, das spritzwasserdicht und staubdicht auf der Haube 22 aufsitzt. Dieses in Fig. 2 umlaufend gestrichelt und in Fig. 4 ausschnittsweise angedeutete Dichtungsband 126 sichert eine spritzwassergeschützte und staubgeschützte Anordnung entsprechend der elektrischen Schutzart IP54 des elektrischen Haushaltszählers in einem im Freien aufgestellten Zähler- und Verteilerschrank. Das Dichtungsband 126 kann auch auf der Haube 22 aufgeschäumt sein.

Neben der unteren Seitenwand 56 und der Querwand 64 sind jeweils zwei Anschraubtuben 130 beziehungsweise 132 auskragend von der Bodenplatte 50 vorhanden. An diesen Anschraubtuben 130, 132 lässt sich eine die Plätze für zwei Adapter 30 freilassende Abdeckplatte 134 festschrauben. Damit diese Abdeckplatte 134 niveaumäßig mit den Seitenwänden 54,54, und den Querwänden 56,64 abschließt, liegen die Stirnseiten der Anschraubtuben niveaumäßig etwas unterhalb der vorderen (oberen) Stirnseite 62 dieser Seitenwände.

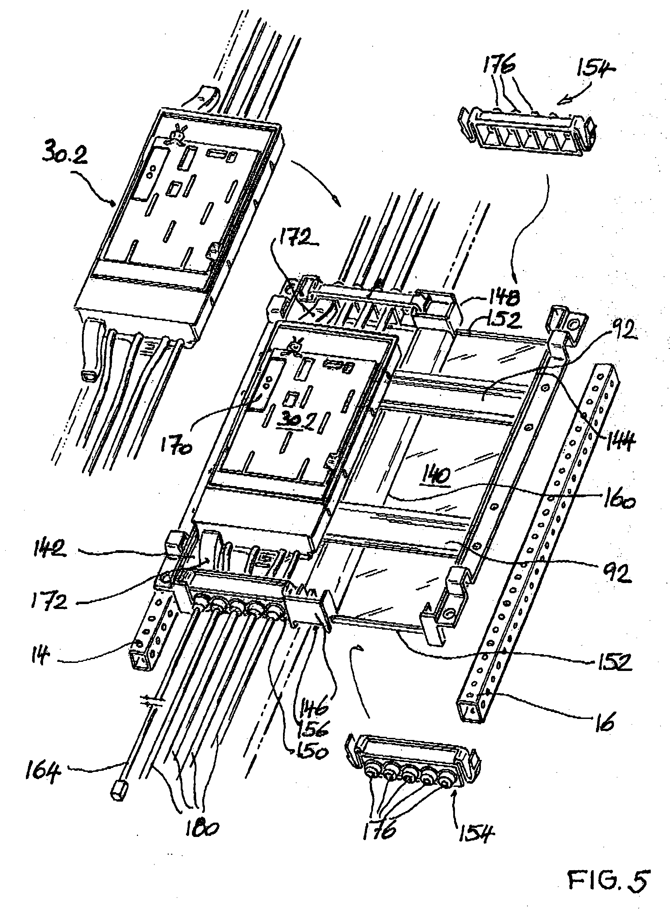

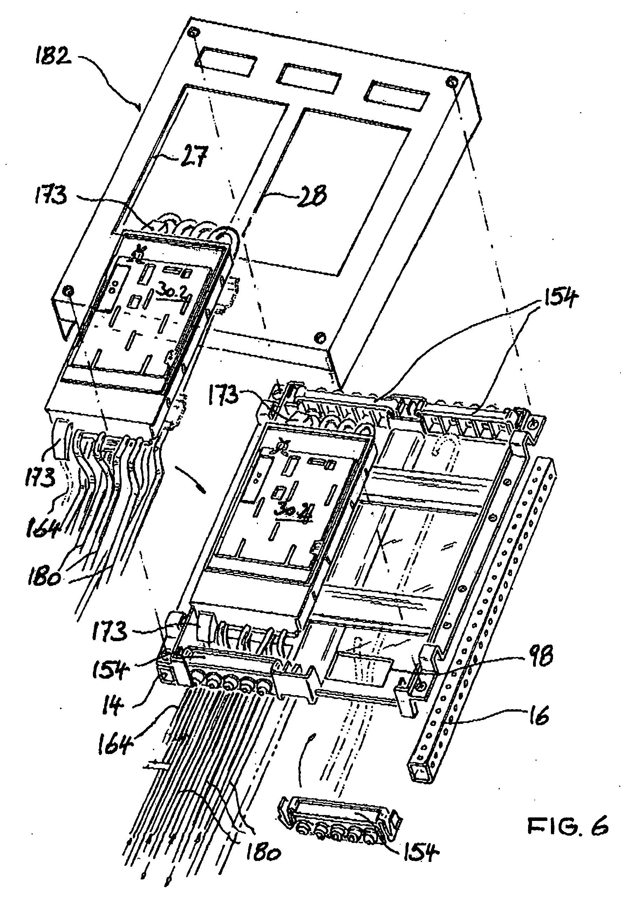

Während bei der vorstehend beschriebenen Halterung für elektronische Haushaltszähler 32, die im vorliegenden Beispielsfall aus einem jeweils zwei elektronische Haushaltszähler 32 und ihre beiden Adapter 30 aufnehmenden Gehäuse aus einer wannenartigen Haube 22 und einer dieselben abdeckenden Abdeckplatte 134 besteht, besteht in den nachstehend beschriebenen Halterungen gemäß Fig. 5 und 6 ein solches Gehäuse aus einem plattenartigen Unterteil und einem als Haube ausgebildeten Oberteil.

Das Unterteil, das anstatt der Haube 22 vorhanden ist, besitzt eine Bodenplatte 140, die seitlich zwei rippenartige Seitenwände 142,144 aufweist. Das untere und obere Ende der Bodenplatte 140 wird jeweils durch einen mittigen Wandbereich 146,148 und seitlich sich daran jeweils anschließende rippenartige Querwände 150,152 gebildet.

Auf den rippenförmigen Querwänden 150, 152, und das betrifft sowohl den unteren als auch den oberen Bereich der Bodenplatte 140, können Steckschieber 154 jeweils aufgeschoben werden. Jeder Steckschieber 154 verrastet seitlich in entsprechend ausgebildeten Endbereichen der rippenartigen Seitenwände 142,144, beziehungsweise des jeweiligen mittigen Wandbereiches 146, 148. In Fig. 5 sind im rechten Bereich der Bodenplatte 140 die Steckschieber 154 noch nicht eingesteckt vorhanden.

Diese Kanalstücke 172 ermöglichen das problemlose auch nachträgliche Verdrahten des Adapters 30.2 und damit der optischen Schnittstelle 170 mit der Datenleitung 164. So kann die Datenleitung zielgesichert von außen durch die Steckschieber hindurch und in den Adapter 30.2 hineingeführt werden.

In dem unteren und oberen mittleren Wandbereich 146,148 ist die untere und obere Kanalöffnung 156 eines Mittelkanals 160 vorhanden. Der Mittelkanal 160 erstreckt sich auf der Bodenplatte 140 mit gleichem parallelen Abstand zu den beiden Tragprofilschienen 14, 16. Durch den Mittelkanal 160 können dadurch Leitungen wie beispielsweise ein Null-Leiter längs durch den Bereich der Bodenplatte 140 von unten nach oben und umgekehrt hindurchgeführt werden.

Oberhalb der Bodenplatte 140 sind zwei Hutschienen 92 vorhanden, auf der im vorliegenden Beispielsfall zwei Adapter 30.2 montiert werden können. Einer der beiden Adapter 30.2 ist bereits auf den beiden Hutschienen 92 befestigt.

Durch den Adapter 30.2 sind, in vergleichbarer Weise wie bei dem Adapter 30, Leitungen hindurchgeführt. Diese Leitungen haben über den Adapter 30.2 elektrischen Kontakt mit dem einen oder den beiden elektrischen Haushaltszählern (eHZ) 32, so wie das an sich bekannt ist.

Im vorliegenden Beispielsfall führt noch eine Datenleitung 164 von unten nach oben durch den Adapter 30.2 hindurch, die eine Verbindung mit einer auf der Oberseite des Adapters ausgebildeten optischen Schnittstelle 170 hat. Der Adapter 30.2 hat eine mit dieser optischen Schnittstelle 170 korrespondierende Schnittstelle.

Auf der unteren und oberen Seite des Adapters 30.2 ragt ein rüsselartiges Kanalstück 172 jeweils nach unten beziehungsweise oben heraus. Durch die beiden rüsselartigen Kanalstücke 172 ist die Datenleitung 164 hindurchgeführt. Die beiden rüsselartigen Kanalstücke 172 enden jeweils an der dem Adapter 30.2 zugewandten Seite des jeweiligen Steckschiebers 154.

In dem Steckschieber 154 sind im vorliegenden Beispielsfall tulpenförmige oder konusförmige Dichtmembrane 176 ausgebildet. Diese Dichtmembrane 176 werden beim Durchführen sowohl der Datenleitung oder der sonstigen durch den Adapter 30.2 hindurchgeführten elektrischen Leitungen 180 durchstoßen. Die Dichtmembrane 176 verhindern, dass Schwitz- beziehungsweise Kondenswasser in das Innere des Gehäuses eindringen kann, das, wie bereits ausgeführt, auf der Rückseite des Zählerplatzes von der Bodenplatte 140 und von vorne durch eine Haube 182 (Fig. 6) gebildet wird. Die beiden rüsselartigen Kanalstücke 172 sind leicht S-förmig gebogen aufgrund der räumlichen Anordnung des Adapters 30.2 und der Dichtmembrane 176 des jeweiligen Steckschiebers 154.

Das Vorhandensein der Steckschieber 154 macht es möglich den Adapter 30.2 zusammen mit den durch ihn und durch den oberen und unteren Steckverbinder 154 hindurchgeführten Leitungen 180 und gegebenenfalls 164 als Einheit - auch nachträglich - auf den Hutschienen 92 zu montieren.

Bei der Darstellung gemäß Fig. 5 können die Leitungen 164, 180 in etwa gradlinig von dem Adapter 30.2 nach unten und oben herausgeführt werden. Bei der Ausführungsform gemäß Fig. 6 ist demgegenüber eine S-förmige Krümmung der Leitungen 164,180 vorhanden. Bei der Ausbildung gemäß Fig. 6 handelt es sich nämlich um eine Halterung, die in einem innerhäuslichen Zähler- und Verteilerschrank verwendet wird. Die dortige Leitungsführung geht, wie vorstehend im Zusammenhang mit der Fig. 1 und 3 beschrieben ist, durch in der Bodenplatte 50 der Haube 22 vorhandene Ausbrechbereiche 98 und einer in der Zählertragplatte 18 vorhandenen Aussparung 100 hindurch und geht dann unter der Zählertragplatte 18 zwischen den beiden Tragprofilschienen 14,16 hindurch. Bei der Ausbildung gemäß Fig. 5, die auf einen im Freien befindlichen Zähler- und Verteilerschrank eingebaut ist, können die Leitungen staub- und wassergeschützt aus dem Bereich des Unterteils und Oberteils herausgeführt werden. Die in der Bodenplatte 140 vorhandenen Ausbrechbereiche 98 (Fig. 3, Fig. 6) werden nicht benutzt. Dafür werden bei dem häuslichen Zähler- und Verteilerschrank die Steckschieber 154 nicht benutzt, weil, wie bereits ausgeführt, die Leitungen 164,180 in einer S-förmigen Krümmung an den Steckschiebern 154 vorbei - und durch die Bodenplatte 140 hindurchgeführt werden. Da die Leitungen in Richtung Rückseite des Zählerplatzes bogenförmig aus dem Adapter 30.2 heraus- beziehungsweise in ihn hereingeführt werden, sind statt der S-förmig geformten Kanalstücke 172 bogenförmig geformte rüsselartige Kanalstücke 173 vorhanden.

Die nicht erforderlichen Ausbrechbereiche 98 bräuchten bei Zählerplätzen für im Freien aufzustellende Zählerschränke nicht vorgesehen zu werden. Die bei einer Benutzung der Ausbrechbereiche 98 erforderlichen Membran-Dichtplatten bräuchten dann herstellerseitig nicht zur Verfügung gestellt werden.

Das einen oder die beiden Adapter 30.2 aufnehmende Gehäuse wird von vorne am Schrank durch das als Haube 182 gebildete Oberteil des entsprechenden Gehäuses verschlossen. In der Haube 182 sind entsprechend den beiden platzierbaren Adaptern 30.2 entsprechende zwei Fenster 27,28 ausgespart, wie das auch bei der Ausführung gemäß Fig. 1 bei der Haube 22 der Fall ist. Durch diese beiden Fenster hindurch kann jeweils ein elektrischer Haushaltszähler 32 auf den dann jeweils freiliegenden Adapter 30.2 aufgesteckt werden.

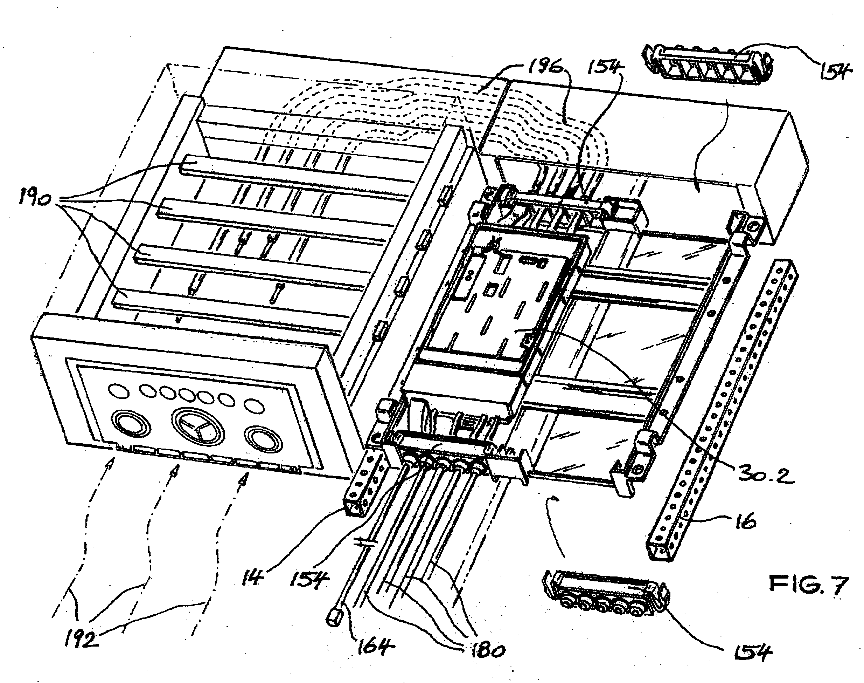

Fig. 7 zeigt ein mit einem elektronischen Haushaltszähler bestücktes Zählerfeld, so wie es auf den vorstehenden Figuren dargestellt und beschrieben ist, und seitlich - in Fig. 7 - links daneben ein weiteres Zählerfeld, welches ein mit elektrischen Sammelschienen 190 ausgestattetes Einspeisungsfeld darstellt. Bei im Freien aufgestellten Zähler- und Verteilerschränken erfolgt die Stromversorgung vom Energieversorger zu solchen Schränken und von dort zu den einzelnen Endverbrauchern jeweils unterirdisch. Daher erfolgt die Stromversorgung von unten (Pfeile 192) in das Einspeisungsfeld hinein und oben aus demselben heraus und von oben in das Zählerfeld mit seinen dort vorhandenen Adaptern 30.2 hinein. Die entsprechende Querverdrahtung ist in einem Quertunnel 196 geschützt untergebracht. Ein solcher Quertunnel 196 ist im Bereich des Einspeisungsfeldes und des Zählerfeldes vorhanden. Grundsätzlich können solche Kanäle - bezogen auf den Adapter 30.2 - nicht oben sondern alternativ oder zusätzlich auch unten angeordnet sein.

Die Leitungsführung durch einen Adapter hindurch kann grundsätzlich von - bezogen beispielsweise auf die Fig. 5, 6 ∼ oben nach unten oder von unten nach oben vorgesehen werden.

## Patentansprüche

1. Halterung für zumindest einen elektronischen Haushaltszähler (32), welche von vorne auf einer Tragkonstruktion anbringbar ist, die zwei mit gegenseitigem Abstand angeordnete Tragprofilschienen (14, 16) aufweist,
- ein aus einem Unterteil und Oberteil zusammensetzbares Gehäuse vorhanden ist,
- das Unterteil und das Oberteil jeweils in Art einer Haube beziehungsweise Wanne oder Platte ausgebildet ist,
- das Unterteil auf den beiden Tragprofilschienen (14,16) eines Freiluft-Zähler- und Verteilerschrankes anschraubbar ist, - Einrichtungen zum Befestigen des einen elektronischen Haushaltszähler (32) rahmenartig umgebenden und auf einem Adapter (30) für den elektronischen Haushaltszähler (32) von vorne aufsitzenden Oberteils des Gehäuses vorhanden sind, - **dadurch gekennzeichnet, dass**
- Ausbrechbereiche (66, 68, 70) in der Bodenplatte (50) des Gehäuses vorhanden sind zum Anschrauben des Unterteils auf einer Zählertragplatte (18), welche ihrerseits auf den beiden Tragprofilschienen (14, 16) eines innerhäuslichen Zähler- und Verteilerschrankes anschraubbar ist,
- weitere Ausbrechbereiche (98) in der Bodenplatte (50) des Gehäuses vorhanden sind zum Hindurchführen von Leitungen.

2. Halterung nach Anspruch 1,
- **dadurch gekennzeichnet, dass**
- eine die oder den weiteren Ausbrechbereich (98) der Bodenplatte (50) verschließende und abdichtende Abdichtplatte (124) mit Einrichtungen zum abgedichteten Hindurchführen von Leitungen vorhanden ist.

3. Halterung nach einem der vorstehenden Ansprüche,
- **dadurch gekennzeichnet, dass**
- jeweils ein nach hinten offener, zumindest bereichsweise vorhandener haubenartiger Längskanal (102, 104) im Anschlussbereich der Bodenplatte (50) mit zwei einander gegenüberliegenden Seitenwänden (52,54) des als Haube ausgebildeten Unterteils vorhanden ist zum Aufsetzen der Haube (22) auf den beiden Tragprofilschienen (14,16) des Freiluft-Zähler- und Verteilerschrankes,
- in den Seitenwänden (52,54) von vorne nach hinten durchdringende Durchbohrungen (110, 112, 114) vorhanden sind zum Anschrauben der Haube (22) auf den beiden Tragprofilschienen (14, 16).

4. Halterung nach Anspruch 3,
- **dadurch gekennzeichnet, dass**
- an den einander gegenüberliegenden Seitenwänden (52,54) Anschraubtuben (80, 82, 84) zum Anschrauben von Hutschienen (92) vorhanden sind.

5. Halterung nach Anspruch 4,
- **dadurch gekennzeichnet, dass**
- jeweils Distanzstücke (94) zwischen Hutschiene (92) und Anschraubtube (80, 82, 84) positionierbar sind.

6. Halterung nach einem der vorstehenden Ansprüche,
- **dadurch gekennzeichnet, dass**
- das Oberteil als Abdeckplatte (134) ausgebildet ist und an Anschraubtuben (130,132) anschraubbar ist, die auf der Innenseite von zwei einander gegenüberliegenden Seitenwänden (52,54) des als Haube (22) ausgebildeten Unterteils vorhanden sind.

7. Halterung nach einem der vorstehenden Ansprüche,
- **dadurch gekennzeichnet, dass**
- das Oberteil von einer haubenartigen Abdeckung (34) so verschließbar ist, dass
- der von dem Oberteil und der Abdeckung (34) eingeschlossene Innenraum spritzwasser- und staubgeschützt vorhanden ist.

8. Halterung nach Anspruch 7,
- **dadurch gekennzeichnet, dass**
- ein Dichtungsband (126) zwischen Oberteil und Abdeckung (34) positionierbar ist.

9. Halterung nach Anspruch 8,
- **dadurch gekennzeichnet, dass**
- das Dichtungsband (126) an dem Oberteil aufgeschäumt vorhanden ist.

10. Halterung für zumindest einen elektronischen Haushaltszähler (32), welche von vorne auf einer Tragkonstruktion anbringbar ist, die zwei mit gegenseitigem Abstand angeordnete Tragprofilschienen (14, 16) aufweist,
- ein aus einem Unterteil und Oberteil zusammensetzbares Gehäuse vorhanden ist,
- das Oberteil als Haube ausgebildet ist,
- das Unterteil plattenartig ausgebildet ist mit einer Bodenplatte (140), die seitlich zwei rippenartige Seitenwände (142,144) aufweist, - das Unterteil auf den beiden Tragprofilschienen (14, 16) eines Freiluft-Zähler- und Verteilerschrankes anschraubbar ist, - **dadurch gekennzeichnet, dass**
- das untere und das obere Ende der Bodenplatte (140) jeweils durch einen mittigen Wandbereich (146, 148) und seitlich sich daran jeweils anschließende rippenartige Querwände (150, 152) gebildet wird,
- auf die rippenförmigen Querwände (150,152) Steckschieber (154) aufschiebbar sind,
- oberhalb der Bodenplatte (140) Hutschienen (92) vorhanden sind, auf die Adapter (30.2) für den elektronischen Haushaltszähler (32) montierbar sind,
- ein längs hindurchgeführter Mittelkanal (160) im Unterteil (140) vorhanden ist, dessen beide Kanalöffnungen (156) in der unteren und oberen, die beiden Seitenwände jeweils quer miteinander verbindenden Wand (146,148) liegen,
- der Steckschieber (154) zumindest eine konusartig oder tulpenförmig ausgebildete Dichtmembrane (176) zum Hindurchführen jeweils einer Leitung (164, 180) besitzt.

11. Halterung nach Anspruch 10,
- **dadurch gekennzeichnet, dass**
- Ausbrechbereiche (98) in der Bodenplatte (140) des Gehäuses vorhanden sind zum Hindurchführen von Leitungen.

12. Halterung nach einem der Ansprüche 10 oder 11,
- **dadurch gekennzeichnet, dass**
- jeweils im Bereich zwischen einem Adapter (30.2) und den mit diesem über zumindest eine Leitung (164) verbundenen oberen und/oder unteren Steckschieber (154) ein diese Leitung (164) aufnehmendes rüsselartiges Kanalstück (172) vorhanden ist.

13. Halterung nach einem der Ansprüche 10 bis 12,
- **dadurch gekennzeichnet, dass**
- zumindest ein Querkanal (196) auf der dem Adapter (30.2) abgewandten Seite des oder der Steckschieber (154) vorhanden ist, durch den hindurch aus dem Adapter (30.2) herausgeführte oder in ihn hineingeführte Leitungen (164, 180) in ein seitlich neben dem Adapter-Feld vorhandenes anderes Zählerfeld führbar sind.

## Claims

1. Holder for at least one electronic household meter (32), to be affixed from the front side to a support construction comprising two support profile rails (14, 16) arranged at a relative distance from each other,
- a housing being provided, to be assembled from a lower part and an upper part,
- the lower part and the upper part are each designed in the form of a hood or a trough or plate,
- the lower part can be screwed to both support profile rails (14, 16) of an open-air meter and distribution cabinet,
- means for fitting the upper part of the housing surrounding an electronic household meter (32) like a frame and resting on an adapter (30) for the electronic household meter (32) being provided,
**characterised in that**
- break-out areas (66, 68, 70) are provided in the floor plate (50) of the housing for screwing the lower part to a meter support plate (18), which can in turn be screwed to the two support profile rails (14, 16) of an in-house meter and distribution cabinet,
- further break-out areas (98) in the floor plate (50) of the housing being provided for routing lines through the same.

2. Holder according to claim 1,
- **characterised in that**
- a sealing plate (124) closing and sealing the one or more further break-out areas (98) of the floor plate (50) with means for the sealed routing of lines through the same is provided.

3. Holder according to one of the preceding claims,
- **characterised in that**
- a hood-like longitudinal channel (102, 104) each, open towards the back and provided at least in part, is provided in the connection area of the floor plate (50) with two opposing side walls (52, 54) of the lower parts designed as a hood, for positioning the hood (22) on the two support profile rails (14, 16) of the open-air meter and distribution cabinet,
- through bores (110, 112, 114) piercing the side walls (52, 54) from front to back are provided for screwing the hood (22) onto the two support profile rails (14, 16).

4. Holder according to claim 3,
- **characterised in that**
- screw connection tubes (80, 82, 84) for screw-fitting DIN rails (92) are provided on the opposing side walls (52, 54).

5. Holder according to claim 4,
- **characterised in that**
- distancers (94) can be positioned between each DIN rail (92) and screw connection tube (80, 82, 84).

6. Holder according to one of the preceding claims,
- **characterised in that**
- the upper part is designed as a cover plate (134) and can be screwed to screw connection tubes (130, 132) provided on the inner side of two opposing side walls (52, 54) of the lower part designed as a hood (22).

7. Holder according to one of the preceding claims,
- **characterised in that**
- the upper part is closable by a hood-like cover (34) in such a way that
- the interior enclosed by the upper part and the cover (34) is protected against splash water and dust.

8. Holder according to claim 7,
- **characterised in that**
- a sealing tape (126) can be positioned between the upper part and the cover (34).

9. Holder according to claim 8,
- **characterised in that**
- the sealing tape (126) is present on the upper part in a foamed fashion.

10. Holder for at least one electronic household meter (32), which can be affixed from the front side to a support construction comprising two support profile rails (14, 16) arranged at a distance from each other,
- a housing being provided to be assembled from a lower part and an upper part,
- the upper part being designed as a hood,
- the lower part being designed plate-like with a floor plate (140) comprising two rib-like side walls (142, 144) at the sides,
- the lower part can be screwed onto both support profile rails (14, 16) of an open-air meter and distribution cabinet,
- **characterised in that**
- the lower and the upper part of the floor plate (140) are each formed by a central wall area (146, 148) and rib-like transverse walls (150, 152) following on from the same at the sides,
- sliding plugs (154) can be pushed onto the rib-like transverse walls (150, 152),
- DIN rails (92) are provided above the floor plate (140), on which adapters (30.2) for the electronic household meter (32) can be mounted,
- a longitudinally routed central channel (160) is provided in the floor plate (140), the two channel openings (156) of which lie in the lower and upper wall area (146, 148) transversely connecting the two side walls with each other,
- the sliding plug (154) has at least one conic or tulip-shaped sealing membrane (176) for respectively routing a line (164, 180).

11. Holder according to claim 10,
- **characterised in that**
- break-out areas (98) are provided in the floor plate (140) of the housing for routing lines through the same.

12. Holder according to one of the claims 10 or 11,
- **characterised in that**
- a trunk-like channel section (172) is provided in the area between an adapter (30.2) and the upper and/or lower sliding plug (154) connected with the same via at least one line (164) for receiving this line (164).

13. Holder according to one of the claims 10 to 12,
- **characterised in that**
- at least one transverse channel (196) is provided on side of the sliding plug or plugs (154) facing away from the adapter (30.2) , through which lines (164, 180) routed out of or into the adapter (30.2) can be routed into another meter field provided to the side of the adapter field.

## Revendications

1. Support de fixation pour au moins un compteur domestique électronique (32), lequel support peut être monté par l'avant sur une structure porteuse qui présente deux rails profilés porteurs (14, 16) disposés à une distance l'un de l'autre,
- un boîtier étant présent, pouvant être assemblé à partir d'une partie inférieure et d'une partie supérieure,
- la partie inférieure et la partie supérieure étant réalisées chacune à la manière d'un capot, plus précisément d'une cuvette ou d'une plaque,
- la partie inférieure pouvant être vissée sur les deux rails profilés porteurs (14, 16) d'une armoire de comptage et de distribution de plein air,
- des moyens pour fixer la partie supérieure du boîtier entourant un compteur domestique électronique (32) à la manière d'un cadre et reposant par l'avant sur un adaptateur (30) pour le compteur domestique électronique (32) étant présents,
- **caractérisé en ce que**
- des zones à évider (66, 68, 70) sont présentes dans la plaque de fond (50) du boîtier pour visser la partie inférieure sur une plaque porteuse de compteur (18), laquelle peut à son tour être vissée sur les deux rails profilés porteurs (14, 16) d'une armoire de comptage et de distribution intérieure,
- d'autres zones à évider (98) sont présentes dans la plaque de fond (50) du boîtier pour le passage de lignes.

2. Support de fixation selon la revendication 1,
- **caractérisé en ce que**
- une plaque d'étanchéité (124) fermant et rendant étanches la ou les autres zones à évider (98) de la plaque de fond (50) et comportant des moyens pour le passage étanche de lignes est présente.

3. Support de fixation selon l'une des revendications précédentes,
- **caractérisé en ce que**
- un canal longitudinal (102, 104) en forme de capot respectivement ouvert vers l'arrière, présent au moins dans certaines zones, est présent dans la zone de raccordement de la plaque de fond (50) avec deux parois latérales (52, 54) opposées de la partie inférieure réalisée en forme de capot pour la pose du capot (22) sur les deux rails profilés porteurs (14,16) de l'armoire de comptage et de distribution de plein air,
- des perçages traversants (110, 112, 114) pénétrant de l'avant vers l'arrière dans les parois latérales (52, 54) sont présents pour visser le capot (22) sur les deux rails profilés porteurs (14, 16).

4. Support de fixation selon la revendication 3,
- **caractérisé en ce que**
- des tubes de vissage (80, 82, 84) pour le vissage de profilés chapeau (92) sont présents sur les parois latérales (52, 54) opposées.

5. Support de fixation selon la revendication 4,
- **caractérisé en ce que**
- des pièces d'écartement (94) peuvent chaque fois être positionnées entre profilé chapeau (92) et tube de vissage (80, 82, 84).

6. Support de fixation selon l'une des revendications précédentes,
- **caractérisé en ce que**
- la partie supérieure est réalisée sous la forme d'une plaque de recouvrement (134) et peut être vissée sur des tubes de vissage (130, 132) qui sont présents sur le côté intérieur de deux parois latérales (52, 54) opposées de la partie inférieure réalisée en forme de capot (22).

7. Support de fixation selon l'une des revendications précédentes,
- **caractérisé en ce que**
- la partie supérieure d'un recouvrement (34) en forme de capot peut être fermée de telle sorte que
- l'espace intérieur renfermé par la partie supérieure et le recouvrement (34) soit protégé contre les projections d'eau et les poussières.

8. Support de fixation selon la revendication 7,
- **caractérisé en ce que**
- une bande d'étanchéité (126) peut être positionnée entre la partie supérieure et le recouvrement (34).

9. Support de fixation selon la revendication 8,
- **caractérisé en ce que**
- la bande d'étanchéité (126) est présente sur la partie supérieure en forme moussée.

10. Support de fixation pour au moins un compteur domestique électronique (32), lequel support peut être monté par l'avant sur une structure porteuse qui présente deux rails profilés porteurs (14, 16) disposés à une distance l'un de l'autre,
- un boîtier étant présent, pouvant être assemblé à partir d'une partie inférieure et d'une partie supérieure,
- la partie supérieure étant réalisée en forme de capot,
- la partie inférieure étant réalisée en forme de plaque avec une plaque de fond (140) qui présente latéralement deux parois latérales (142, 144) en forme de nervure,
- la partie inférieure pouvant être vissée sur les deux rails profilés porteurs (14, 16) d'une armoire de comptage et de distribution de plein air,
- **caractérisé en ce que**
- l'extrémité inférieure et l'extrémité supérieure de la plaque de fond (140) sont formées chaque fois par une zone de paroi centrale (146, 148) et des parois transversales (150, 152) en forme de nervure s'y raccordant latéralement,
- des réglettes embrochables (154) peuvent être enfilées sur les parois transversales (150, 152) en forme de nervure,
- des profilés chapeau (92) sont présents au-dessus de la plaque de fond (140), sur lesquels des adaptateurs (30.2) pour le compteur domestique électronique (32) peuvent être montés,
- un canal central (160) traversant longitudinalement est présent dans la partie inférieure (140), dont les deux ouvertures de canal (156) se situent dans les parois inférieure et supérieure (146, 148) reliant respectivement entre elles transversalement les deux parois latérales,
- la réglette embrochable (154) possède au moins une membrane d'étanchéité (176) réalisée en forme de cône ou en forme de tulipe pour le passage de chaque fois une ligne (164, 180).

11. Support de fixation selon la revendication 10,
- **caractérisé en ce que**
- des zones à évider (98) sont présentes dans la plaque de fond (140) du boîtier pour le passage de lignes.

12. Support de fixation selon l'une des revendications 10 ou 11,
- **caractérisé en ce que**
- un tronçon de canal (172) en forme de trompe est présent chaque fois dans la zone située entre un adaptateur (30.2) et la réglette embrochable (154) supérieure et/ou inférieure reliée à celui-ci par au moins une ligne (164) pour recevoir ladite ligne (164).

13. Support de fixation selon l'une des revendications 10 à 12,
- **caractérisé en ce que**
- au moins un canal transversal (196) est présent sur le côté de la ou des réglettes embrochables (154) opposé à l'adaptateur (30.2), à travers lequel des lignes (164, 180) sortant de l'adaptateur (30.2) ou entrant dans celui-ci peuvent être guidées dans un autre champ de compteur présent latéralement à côté du champ d'adaptateur.
